**Europäisches Patentamt**

**European Patent Office**

**Office européen des brevets**

(19)

(11) Numéro de publication: **0 060 592**
**B1**

(12)

# FASCICULE DE BREVET EUROPEEN

(45) Date de publication du fascicule du brevet:
**24.07.85**

(21) Numéro de dépôt: **82200277.0**

(22) Date de dépôt: **04.03.82**

(51) Int. Cl.⁴: **A 46 D 1/00,** A 46 D 9/02,
A 46 B 3/06, A 46 D 3/04,
A 46 B 17/06

(54) **Procédé pour arrondir les extrémités libres des poils d'une brosse.**

(30) Priorité: **18.03.81 LU 83225**

(43) Date de publication de la demande:
**22.09.82 Bulletin 82/38**

(45) Mention de la délivrance du brevet:
**24.07.85 Bulletin 85/30**

(84) Etats contractants désignés:
**AT BE CH DE FR GB IT LI NL SE**

(56) Documents cités:
**CH - A - 341 791**
**CH - A - 407 040**
**CH - A - 533 434**
**DE - B - 1 083 781**
**FR - A - 2 049 824**
**GB - A - 1 564 869**
**US - A - 2 587 792**

(73) Titulaire: **d'Argembeau, Etienne Yves G. J., 24 Rue de Belle-Vue, B-1050 Bruxelles (BE)**

(72) Inventeur: **d'Argembeau, Etienne Yves G. J., 24 Rue de Belle-Vue, B-1050 Bruxelles (BE)**

(74) Mandataire: **De Brabanter, Maurice et al, Bureau VANDER HAEGHEN 63 Avenue de la Toison d'Or, B-1060 Bruxelles (BE)**

ACTORUM AG

## Description

La présente invention est relative à un procédé pour arrondir les extrémités libres des poils en matière organique synthétique thermoplastique d'une brosse.

Les brosses connues à poils en matière organique synthétique thermoplastique possèdent des poils dont l'extrémité libre a souvent une forme telle que ces poils peuvent abîmer, voire même griffer certaines surfaces avec lesquelles elles sont mises en contact lors de brossages. C'est ainsi que certaines brosses, telles que les brosses à dents ou les brosses à cheveux, ont des poils à extrémités tranchantes qui peuvent provoquer des lésions des gencives ou du cuir chevelu, en particulier lorsque ces brosses possèdent des poils en matière organique synthétique à extrémités libres acérées. De même, les brosses de ménage à poils en matière organique synthétique sont, en général, inutilisables, par exemple pour brosser des surfaces relativement tendres, telles que celles des parquets ou pavements cirés, car les extrémités des poils endommagent ces surfaces.

Il est connu de remédier à ces inconvénients, en arrondissant les extrémités libres des poils en matière organique synthétique thermoplastique de brosses. Divers procédés d'arrondissement des extrémités libres des poils de brosses par traitement thermique ou chimique sont connus notamment par les documents CH-A 407 040, DE-B 1 083 781, ainsi que US-A 2 587 792.

Ainsi, le document US-A 2 587 792 décrit un procédé dans lequel les extrémités libres des poils qui peuvent être en une matière conductrice de l'électricité ou en une matière diélectrique sont chauffées à une température correspondant sensiblement à leur température de fusion par une décharge électrique couronne produite entre l'extrémité libre de chaque poils agissant comme une électrode et une autre électrode placée à une certaine distance de ladite extrémité libre et ayant, de préférence, un rayon beaucoup plus grand que celui de ladite extrémité libre. Ce procédé a l'inconvénient de nécessiter plusieurs traitements successifs des poils d'une même brosse, lorsque, comme cela est souvent le cas, ces poils n'ont pas la même hauteur, et n'ont pas leurs extrémités libres uniformément réparties dans un même plan.

Le demandeur a constaté qu'en utilisant une source de rayons laser, il est possible d'arrondir, de manière régulière, les extrémités libres de poils en matière thermoplastique d'une brosse, par un seul balayage de ces extrémités par une source de rayons laser, même si ces extrémités ne se trouvent pas au même niveau.

La présente invention concerne donc un procédé pour arrondir les extrémités libres des poils d'une brosse à poils en matière organique synthétique thermoplastique, dans lequel on soumet les extrémités libres des poils à un traitement thermique de manière à provoquer un arrondissement de ces extrémités, ce procédé étant essentiellement caractérisé en ce qu'on soumet lesdites extrémités libres des poils à l'action d'une source de rayons laser.

Dans une forme de réalisation particulière du procédé suivant l'invention on soumet les extrémités libres des poils dirigés vers le bas à l'action d'une source de rayons laser disposée en dessous desdites extrémités libres des poils.

Pendant que les extrémités libres des poils sont so soumises à l'action de la source de rayons laser, on assure avantageusement un mouvement relatif entre lesdites extrémités libres et la source de rayons laser, de façon que ces rayons balaient toute la zone garnie de poils de la brosse.

Le mouvement relatif entre la source de rayons laser et les extrémités libres des poils, de même que l'intensité de la source de rayons laser sont, de préférence, réglés de façon que les extrémités libres des poils soient ramollies, de manière à prendre en quelque sorte la forme d'une petite goutte d'eau tombante, sans provoquer de détachement desdites extrémités des poils arrondis, ni une adhérence entre extrémités de poils arrondies adjacentes.

Pendant le mouvement relatif entre la source de rayons laser et les extrémités libres des poils d'une brosse, cette source et ces extrémités restent, de préférence, à une distance mutuelle sensiblement constante. Ainsi, on peut faire en sorte que la source de rayons laser soit déplacée en direction sensiblement horizontale par rapport aux poils dirigés vers le bas de la brosse qui reste en position fixe au-dessus de ladite source de rayons thermiques. Au contraire, on peut déplacer en direction horizontale la brosse à poils dirigés verticalement vers le bas au-dessus de la source de rayons laser.

La distance sensiblement constante entre la source de rayons laser et les extrémités des poils de la brosse peut varier, en fonction de divers facteurs variables, tels que la nature des poils, l'écartement entre leurs extrémités libres, la nature de la source de rayons laser, l'intensité calorifique des rayons émis par cette source.

Quant au déplacement relatif éventuel entre la source de rayons laser et les poils de la brosse, son ampleur et sa vitesse sont également variables, en fonction de divers facteurs, tels que la surface occupée par les extrémités des poils de la brosse.

Le déplacement relatif entre la source de rayons laser et les poils de la brosse peut s'effectuer dans la direction longitudinale de la surface occupée par les extrémités des poils et/ou dans la direction transversale de cette surface.

La source de rayons laser peut être utilisée avec ou sans dispositif de focalisation des rayons.

Pour assurer aux extrémités libres des poils une forme arrondie régulière, il peut être avantageux de prévoir dans la zone dans laquelle se trouvent les poils de passage d'un courant d'un gaz, de préférence inerte, soumettant ces poils à une aspiration dirigée éventuellement dans la direction de la source de rayons laser. L'emploi d'un courant d'aspiration de gaz inerte, tel que l'azote, ou la présence d'une atmosphère de gaz inerte offre également l'avantage d'empêcher un roussissement des poils sous l'effet de la chaleur produite par la source de rayons laser.

Les exemples suivants illustrent, à titre non limitatif, une forme de réalisation du procédé suivant l'invention.

Exemples

Dans un premier essai, on a utilisé une brosse à dents comportant quatre rangées parallèles de touffes de poils en nylon, chaque touffe de poils comportant 30 poils monofilamentaires d'un diamètre d'environ 0,2 millimètre, les touffes étant à une distance mutuelle d'environ 1 millimètre à leurs extrémités libres.

La brosse à dents précitée a été placée, de façon que les extrémités de ses touffes de poils soient dirigées vers le bas à une distance d'environ 4 cm d'une source de rayons laser du type SAF d'une puissance de 300 watts ramenée à environ 20 watts, disposée en dessous des extrémités des touffes de poils de la brosse à dents.

En déplaçant la source de rayons laser réglée à une puissance de 20 watts à raison de 250 centimètres par minute, on a soumis toute la plage ou surface occupée par les extrémités de poils de la brosse à l'action de la source de rayons laser.

On a examiné la brosse ainsi traitée au microscope et on a constaté que les extrémités de tous les poils présentaient une forme arrondie, sans être collées l'une à l'autre, tandis que la même brosse non traitée par le procédé suivant l'invention présentait des extrémités effilées, souvent munies d'échardes acérées au voisinage de ces extrémités.

Dans d'autres essais effectués sur des brosses à dents du même type que celle décrite plus haut, on a soumis les poils des brosses soumises à une légère vibration pendant 1 à 2 secondes à une source de rayons laser à $CO_2$ d'une puissance de 50 à 100 watts placée en dessous des extrémités des poils à environ 4 cm de celles-ci. L'examen au microscope des brosses ainsi traitées a révélé que les extrémités des poils présentaient une forme parfaitement arrondie, sans aucun endommagement de la matière constitutive des poils.

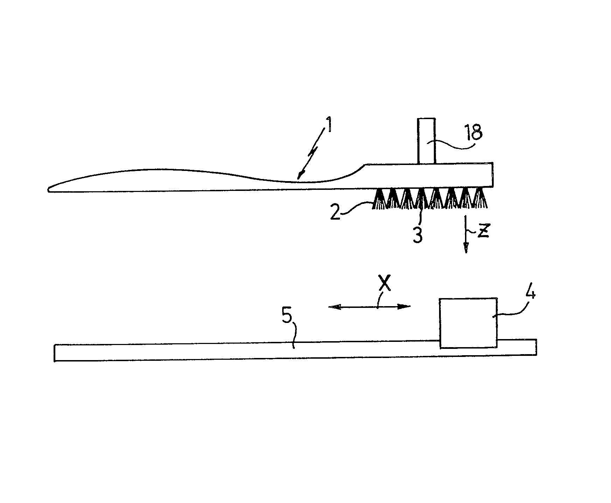

La figure 1 du dessin ci-annexé montre schématiquement en élévation latérale comment le procédé décrit ci-dessus est mis en œuvre.

Sur cette figure, une brosse à dents désignée dans son ensemble par la notation de référence 1 est maintenue, par des moyens quelconques non représentés, en position horizontale, de façon que les touffes de poils 2 soient dirigées vers le bas. A une distance appropriée des extrémités 3 des poils des touffes 2 est disposée une source de rayons laser 4 du type précité. Cette source de rayons laser 4 est déplaçable sur un guide horizontal schématisé par la ligne 5 dans le sens des flèches X, tandis que la brosse 1 peut être soumise à des vibrations à l'aide d'un vibreur 18 en contact avec elle.

Comme on l'a souligné plus haut, la source de rayons laser peut être maintenue immobile, tandis que la brosse à dents est déplaçable horizontalement.

On peut également faire en sorte que la brosse à dents et la source de rayons laser soient toutes deux simultanément déplacées en sens opposés.

Il est évident qu'au lieu de déplacer éventuellement la source de rayons laser, on peut provoquer un déplacement de ces rayons, par exemple à l'aide d'un miroir mobile, tout en maintenant la source fixe.

Une atmosphère ou un courant d'aspiration d'un gaz inerte, tel que de l'azote, de l'argon ou de l'hélium, peut être prévue dans la zone des poils 2 de la brosse pendant son traitement. Dans le cas où l'on utilise un courant d'aspiration de gaz inerte, celui-ci est avantageusement dirigé dans le sens de la flèche Z.

Enfin, sans sortir du cadre de l'invention, la brosse à dents peut être orientée de manière à s'étendre perpendiculairement à la position occupée à la figure 1 et peut, dans ce cas, être fixée ou déplaçable perpendiculairement aux flèches X en face d'une source de rayons laser.

**Revendications**

1. Procédé pour arrondir les extrémités libres des poils d'une brosse à poils en matière organique synthétique thermoplastique, dans lequel on soumet les extrémités libres des poils à un traitement thermique de manière à provoquer un arrondissement de ces extrémités, caractérisé en ce qu'on soumet lesdites extrémités libres des poils à l'action d'une source de rayons laser.

2. Procédé suivant la revendication 1, caractérisé en ce qu'on soumet les extrémités libres des poils dirigés vers le bas à l'action d'une source de rayons laser disposée en dessous desdites extrémités libres des poils.

3. Procédé suivant l'une quelconque des revendications 1 et 2, caractérisé en ce que, pendant que les extrémités libres des poils sont soumises à l'action de la source de rayons laser, on assure un mouvement relatif entre les extrémités libres des poils et la source de rayons laser, de façon que ces rayons balaient toute la zone garnie de poils de la brosse.

4. Procédé suivant la revendication 3, caractérisé en ce que le mouvement relatif entre la source de rayons laser et les extrémités libres des poils, de même que l'intensité de la source de rayons laser sont réglés de façon que les extrémités libres des poils soient ramollies, de manière à prendre en quelque sorte la forme d'une petite goutte d'eau tombante, sans provoquer de détachement desdites extrémités des poils arrondis, ni une adhérence entre extrémités de poils arrondies adjacentes.

5. Procédé suivant l'une quelconque des revendications 1 à 4, caractérisé en ce que la brosse est soumise à une vibration pendant que les extrémités libres des poils sont soumises à l'action de la source de rayons laser.

6. Procédé suivant l'une quelconque des revendications 1 à 5, caractérisé en ce qu'on opère le traitement des extrémités libres des poils par la source de rayons laser dans une atmosphère contenant un gaz inerte.

7. Procédé suivant l'une quelconque des revendications 1 à 6, caractérisé en ce qu'on soumet les poils à une aspiration pendant que leurs extrémités libres sont soumises à l'action de la source de rayons laser.

## Patentansprüche

1. Verfahren zum Abrunden der freien Enden der Borsten einer Bürste mit Borsten aus thermoplastischem, synthetischem organischem Material, bei welchem die freien Enden der Borsten einer Wärmebehandlung unterzogen werden, so dass eine Abrundung dieser Enden bewirkt wird, dadurch gekennzeichnet, dass die freien Enden der Borsten der Wirkung einer Laserstrahlenquelle unterworfen werden.

2. Verfahren nach Anspruch 1, dadurch gekennzeichnet, dass die nach unten gerichteten freien Enden der Borsten der Wirkung einer unterhalb der freien Enden der Borsten angeordneten Laserstrahlenquelle unterworfen werden.

3. Verfahren nach einem der Ansprüche 1 und 2, dadurch gekennzeichnet, dass man, während die freien Enden der Borsten der Wirkung der Laserstrahlenquelle unterworfen sind, eine Relativbewegung zwischen den freien Enden der Borsten und der Laserstrahlenquelle gewährleistet, so dass diese Strahlen die gesamte mit den Borsten der Bürste versehene Zone überstreichen.

4. Verfahren nach Anspruch 3, dadurch gekennzeichnet, dass die Relativbewegung zwischen der Laserstrahlenquelle und den freien Enden der Borsten sowie die Intensität der Laserstrahlenquelle derart reguliert werden, dass die freien Enden der Borsten so aufgeweicht werden, dass sie irgendwie die Form eines herabfallenden Wassertropfens haben, ohne ein Ablösen der Enden der abgerundeten Borsten oder ein Zusammenkleben benachbarter abgerundeter Borsten zu bewirken.

5. Verfahren nach einem der Ansprüche 1 bis 4, dadurch gekennzeichnet, dass die Bürste Schwingungen unterzogen wird, während die freien Enden der Borsten der Wirkung der Laserstrahlenquelle unterworfen sind.

6. Verfahren nach einem der Ansprüche 1 bis 5, dadurch gekennzeichnet, dass man die Behandlung der freien Enden der Borsten mit der Laserstrahlenquelle in einer inertes Gas enthaltenden Atmosphäre durchführt.

7. Verfahren nach einem der Ansprüche 1 bis 6, dadurch gekennzeichnet, dass man die Borsten einer Saugwirkung aussetzt, während ihre freien Enden der Wirkung der Laserstrahlenquelle unterworfen sind.

## Claims

1. Process for rounding the free ends of the bristles of a brush comprising bristles made of an organic thermoplastic synthetic material, in which the free ends of the bristles are submitted to a thermal treatment so as to cause a rounding of said ends, characterized in that said free ends of the bristles are submitted to the action of a laser beam source.

2. Process according to claim 1, characterized in that the free ends of the bristles extending downwardly are submitted to the action of a laser beam source placed under said free ends of the bristles.

3. Process according to any one of the claims 1 and 2, characterized in that during the submission of the free ends of the bristles to the action of the laser beam source, a relative movement is created between the free ends of these bristles and the laser beam source, so that said beams sweep across the whole area of the bristles of the brush.

4. Process according to claim 3, characterized in that the relative movement between the laser beam source and the free ends of the bristles, as well as the intensity of the laser beam source are adjusted so that the free ends of the bristles are softened, so as to take substantially the shape of a small falling water drop, without causing a detaching of said rounded bristle ends, nor a sticking between the adjacent rounded bristle ends.

5. Process according to any one of claims 1 to 4, characterized in that the brush is submitted to a vibration during the treatment of the free ends of the bristles by the laser beam source.

6. Process according to any one of claims 1 to 5, characterized in that the free ends of the bristles are treated by the laser beam source in an atmosphere containing an inert gas.

7. Process according to any one of claims 1 to 6, characterized in that the bristles are submitted to an aspiration during the treatment of this free ends by the laser beam source.